# EUROPEAN PATENT APPLICATION

(11) **EP 4 372 669 A1**
(43) Date of publication of application: **22.05.2024**
(21) Application number: 23210062.8
(22) Date of filing: 15.11.2023
(51) Int. Cl.: G06T 1/20, G06T 5/00

(54) **METHOD FOR CONSTRUCTING IMAGE SIGNAL PROCESSOR, DEVICE, AUTONOMOUS DRIVING SYSTEM, AND MEDIUM**

(30) Priority: 15.11.2022 CN 202211429259
(71) Applicant: Anhui NIO Autonomous Driving Technology Co., Ltd., Hefei, Anhui 230601 (CN)
(72) Inventor: WAN, Lei, Hefei, Anhui Province, 230601 (CN); LU, Xin, Hefei, Anhui Province, 230601 (CN); ZHU, Daiyi, Hefei, Anhui Province, 230601 (CN); WANG, Haifeng, Hefei, Anhui Province, 230601 (CN); REN, Bangyan, Hefei, Anhui Province, 230601 (CN); YAO, Yuhan, Hefei, Anhui Province, 230601 (CN); REN, Shaoqing, Hefei, Anhui Province, 230601 (CN); PENG, Chao, Hefei, Anhui Province, 230601 (CN)
(74) Representative: Vossius & Partner Patentanwälte Rechtsanwälte mbB

(57) **Abstract**

The disclosure provides a method for constructing an image signal processor, a device, an autonomous driving system, and a medium. The method includes: constructing a plurality of candidate image signal processors based on at least some of the image signal processing modules from a collection; each candidate image signal processor processing an acquired original image, to generate a plurality of sets of processed target images; inputting each set of target images into at least one preset perception task model, and outputting a first perception result corresponding to each perception task model; and selecting the candidate image signal processor that meets a preset performance criteria as the target image signal processor based on all the first perception results corresponding to each candidate image signal processor, thereby realizing the selection of the target image signal processor from the perspective of perception of an autonomous driving system, reducing the error rate in evaluation acquired based on human eyes, improving the recognition accuracy of the autonomous driving system, and further ensuring safe operation of the autonomous driving system.

## Description

### Technical Field

The disclosure relates to the field of image processing technologies, and specifically provides a construction method and device for an image signal processor, an autonomous driving system, and a medium.

### Background Art

Currently, no matter for a camera serving an autonomous driving system or a camera used by users, the image quality is adjusted based on perception of human eyes, such that a final camera imaging effect meets human preferences.

However, an original image acquired by a camera used to perceive data in an autonomous driving system needs to be processed by an image signal processor (ISP) before it can be inputted into a perception module for image algorithm recognition and prediction. However, an image quality adjustment effect acquired by processing an image signal by an ISP that is based on human eye preferences cannot effectively improve the performance of a perception module of the autonomous driving system.

Therefore, how to construct an ISP that improves the image quality adjustment effect so as to improve the recognition accuracy of an autonomous driving system and further ensure safe operation of the autonomous driving system is a technical problem that needs to be solved urgently by those skilled in the art.

### Summary

In order to overcome the above defects, the disclosure provides a construction method and device for an image signal processor, an autonomous driving system, and a medium, to solve or at least partially solve the technical problem as follows: an image quality adjustment effect acquired by an ISP cannot meet perception requirements, resulting in relatively low recognition accuracy of the autonomous driving system and thus relatively low safety of the autonomous driving system.

In a first aspect, the disclosure provides a method for constructing an image signal processor. The method for constructing an image signal processor includes:
constructing a plurality of candidate image signal processors based on at least some of the image signal processing modules from a collection;
each candidate image signal processor processing an acquired original image, to generate a plurality of sets of processed target images;
inputting each set of target images into at least one preset perception task model for perception, and outputting a first perception result corresponding to each perception task model; and
selecting the candidate image signal processor that meets a preset performance criteria as a finally constructed target image signal processor based on all the first perception results corresponding to each candidate image signal processor.

In a second aspect, the disclosure provides a construction device for an image signal processor. The construction device for an image signal processor includes a processor and a storage apparatus adapted to store a plurality of program codes, where the program codes are adapted to be loaded and run by the processor to perform the method for constructing an image signal processor according to any one of the above.

In a third aspect, there is provided an autonomous driving system. The autonomous driving system includes the construction device for an image signal processor as described above.

In a fourth aspect, there is provided a computer-readable storage medium. The computer-readable storage medium stores a plurality of program codes, where the program codes are adapted to be loaded and run by a processor to perform the method for constructing an image signal processor according to any one of the above technical solutions.

The above one or more technical solutions of the disclosure have at least one or more of the following beneficial effects:
In the technical solutions implementing the disclosure, the plurality of candidate image signal processors are constructed based on at least some of the image signal processing modules in the collection; the acquired original image is processed by each candidate image signal processor, to obtain the plurality of sets of processed target images; each set of target images is inputted into at least one preset perception task model for perception, and the first perception result corresponding to each perception task model is outputted; and the candidate image signal processor that meets the preset performance criteria is selected as the finally constructed target image signal processor based on all the first perception results corresponding to each candidate image signal processor, which realizes pre-construction of the plurality of candidate image signal processors and automatic selection, therefrom from the perspective of perception of the autonomous driving system, of the target image signal processor that meets the preset performance criteria, thereby reducing the error rate in evaluation acquired based on human eyes, ensuring that an acquired image quality adjustment effect can meet perception requirements, improving the recognition accuracy of the autonomous driving system, and further ensuring safe operation of the autonomous driving system.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a method for constructing an image signal processor according to an embodiment of the disclosure; and
FIG. 2 is a block diagram of a main structure of a construction device for an image signal processor according to an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

An original image acquired by a camera used to perceive data in an autonomous driving system needs to be processed by an ISP before it can be inputted into a perception module for image algorithm recognition and prediction.

Therefore, to construct an ISP that has higher performance so as to improve the recognition accuracy of the autonomous driving system and further ensure safe operation of the autonomous driving system, the disclosure provides the following technical solutions:

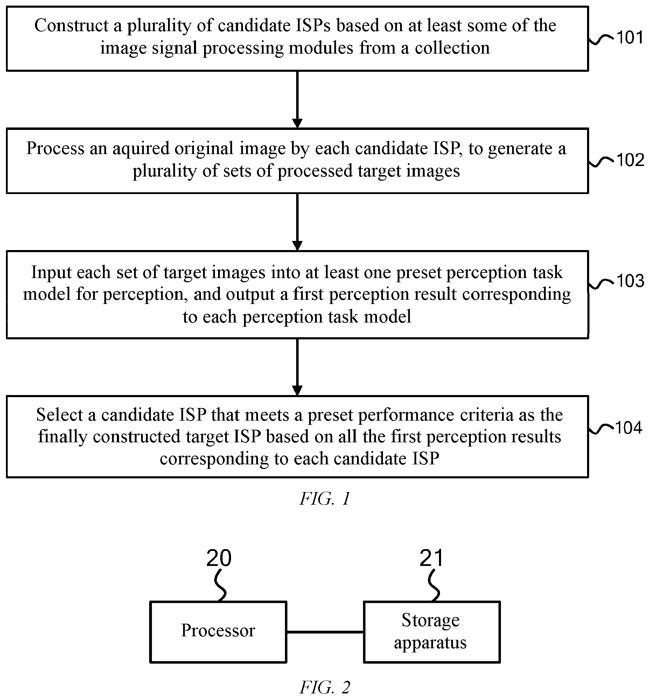

FIG. 1 is a schematic flowchart of main steps of a method for constructing an image signal processor according to an embodiment of the disclosure. As shown in FIG. 1, the method for constructing an image signal processor in this embodiment of the disclosure mainly includes steps 101 to 104 below.

Step 101: Construct a plurality of candidate ISPs based on at least some of the image signal processing modules from a collection.

In a specific implementation process, different image signal processing modules may be used during image processing. Here, image signal processing modules that may be used may be combined into an collection, and then at least some of the image signal processing modules are selected from the collection to construct the plurality of candidate ISPs. The collection includes at least one of the following image signal processing modules: a black level correction module, a lens shading correction module, a bad pixel correction module, a purple fringing removal module, a white balance module, an automatic exposure module, a demosaicing module, a color correction module, a gamma correction module, a dynamic range compression module, a decompression module, a global tone mapping module, a sharpening module, a false color removal module, a noise reduction module, a hue and saturation control module, a color space conversion module, and a defogging module.

In a specific implementation process, a plurality of sets of different image signal processing modules may be selected from the collection and combined to construct the plurality of candidate ISPs. In other words, any two candidate ISPs may include different image signal processing modules. A candidate ISP 1 includes a black level correction module, a lens shading correction module, and a bad pixel correction module; and a candidate ISP 2 includes a black level correction module, a lens shading correction module, and an automatic exposure module.

In a specific implementation process, a plurality of sets of same image signal processing modules may alternatively be selected from the collection and arranged to construct the plurality of candidate ISPs. In other words, any two candidate ISPs may include same image signal processing modules, but the same image signal processing modules may be arranged in different orders. For example, the candidate ISP 1 and a candidate ISP 3 both include a black level correction module, a lens shading correction module, and a bad pixel correction module. In the candidate ISP 1, the modules are arranged according to the order of the black level correction module, the lens shading correction module, and the bad pixel correction module; however, in the candidate ISP 3, the modules are arranged according to the order of the black level correction module, the bad pixel correction module, and the lens shading correction module.

Step 102: Each candidate image signal processor process an acquired original image, to generate a plurality of sets of processed target images.

In a specific implementation process, the original image may be acquired by configuring fixed exposure parameters based on default camera sensor settings, and the acquired original image is inputted into each candidate ISP to be processed, to obtain the plurality of sets of processed target images under different effects.

Step 103: Input each set of target images into at least one preset perception task model for perception, and output a first perception result corresponding to each perception task model.

In a specific implementation process, at least one perception task network may be selected for training according to a specific application scenario, to obtain a corresponding perception task model, then each set of target images is inputted into at least one preset perception task model for perception, and the first perception result corresponding to each perception task model is outputted. For an autonomous driving scenario, the perception task model may include a human/vehicle detection model, a parking spot detection model, a lane line detection model, a traffic sign/traffic light detection model, etc. Sample data for training the perception task model may be acquired from a sample database in advance, or some of the target images may be selected as the sample data, which is not specifically limited in this embodiment.

Step 104: Select a candidate ISP that meets a preset performance criteria as a finally constructed target ISP based on all the first perception results corresponding to each candidate ISP.

In a specific implementation process, if there is one perception task model, and there is one first perception result corresponding to each candidate ISP, the first perception result may be used as a performance evaluation result of the candidate ISP, and a candidate ISP having an optimal performance evaluation result is selected.

In a specific implementation process, if there are a plurality of perception task models, and there are a plurality of first perception results corresponding to each candidate ISP, all the first perception results may be processed to obtain a second perception result for each candidate ISP. The candidate ISP that meets the preset performance criteria is selected as the target ISP based at least on all the second perception results.

Specifically, a weight of the first perception result corresponding to each perception task model may be set based on a priority of each perception task model, and then weighted average of all the first perception results corresponding to each candidate ISP is calculated, to obtain the second perception result for each candidate ISP.

In a specific implementation process, only the second perception result may be used as a performance evaluation result of the candidate ISP, and a candidate ISP having an optimal performance evaluation result is selected.

In a specific implementation process, the performance evaluation result of each candidate ISP may also be determined based on all the second perception results, construction costs of each candidate ISP, and an image processing time of each candidate ISP; and a candidate ISP having an optimal performance evaluation result is selected as the target ISP.

In a specific implementation process, the performance evaluation result of each candidate ISP may be acquired through but not limited to the following method: weighted summation is performed on all the second perception results, the construction costs of each candidate ISP, and the image processing time of each candidate ISP to obtain the performance evaluation result of each candidate ISP.

According to the construction method for an ISP in this embodiment, the plurality of candidate ISPs are constructed based on at least some of the image signal processing modules in the collection; the acquired original image is processed by each candidate ISP, to obtain the plurality of sets of processed target images; each set of target images is inputted into at least one preset perception task model for perception, and the first perception result corresponding to each perception task model is outputted; and the candidate ISP that meets the preset performance criteria is selected as the finally constructed target ISP based on all the first perception results corresponding to each candidate ISP, which realizes pre-construction of the plurality of candidate ISPs and automatic selection, therefrom from the perspective of perception of the autonomous driving system, of the target ISP that meets the preset performance criteria, thereby reducing the error rate in evaluation acquired based on human eyes, ensuring that an acquired image quality adjustment effect can meet perception requirements, improving the recognition accuracy of the autonomous driving system, and further ensuring safe operation of the autonomous driving system.

In a specific implementation process, after the first perception result corresponding to each perception task model is acquired, a priority of each image signal processing module in the collection may also be determined based on all the first perception results corresponding to each candidate ISP.

Specifically, after all the first perception results corresponding to each candidate ISP are acquired, a performance effect of each image signal processing module constituting each candidate ISP on a perception task can be known, and each image signal processing module of each candidate ISP is scored to obtain a corresponding scoring value. In this way, each image signal processing module in the collection has at least one scoring value, and finally a highest scoring value is selected based on at least one scoring value of each image signal processing module in the collection, so that the priority of each image signal processing module can be acquired.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a construction device for an ISP.

FIG. 2 is a block diagram of a main structure of a construction device for an ISP according to an embodiment of the disclosure. As shown in FIG. 2, the construction device for an ISP in this embodiment of the disclosure may include a processor 20 and a storage apparatus 21. The storage apparatus 20 may be configured to store a program for performing the construction method for an ISP of the above method embodiment. The processor may be configured to execute the program in the storage apparatus 21, where the program includes but is not limited to a program for performing the construction method for an ISP of the above method embodiments. For ease of description, only parts related to the embodiments of the disclosure are shown. For specific technical details that are not disclosed, reference may be made to the method part of the embodiments of the disclosure. The construction device for an ISP may be a control device including various electronic devices.

Further, the disclosure further provides an autonomous driving system. The autonomous driving system may include the construction device for an ISP of the above embodiment.

Further, the disclosure further provides a computer-readable storage medium. In an embodiment of a computer-readable storage medium according to the disclosure, the computer-readable storage medium may be configured to store a program for performing the construction method for an ISP in the above method embodiments, and the program may be loaded and run by a processor to implement the above construction method for an ISP. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A method for constructing an image signal processor, comprising:
constructing a plurality of candidate image signal processors based on at least some of the image signal processing modules from a collection;
each candidate image signal processor processing an acquired original image, to generate a plurality of sets of processed target images;
inputting each set of target images into at least one preset perception task model, and outputting a first perception result corresponding to each perception task model; and
selecting the candidate image signal processor that meets a preset performance criteria as a finally constructed target image signal processor based on all the first perception results corresponding to each candidate image signal processor.

2. The method for constructing an image signal processor according to claim 1, wherein there are a plurality of perception task models, and there are a plurality of first perception results corresponding to each candidate image signal processor; and
the selecting the candidate image signal processor that meets a preset performance criteria as a finally constructed target image signal processor based on all the first perception results corresponding to each candidate image signal processor comprises:
processing all the first perception results to obtain a second perception result corresponding to each candidate image signal processor; and
selecting the candidate image signal processor that meets the preset performance criteria as the target image signal processor based at least on all the second perception results.

3. The method for constructing an image signal processor according to claim 2, wherein the selecting the candidate image signal processor that meets the preset performance criteria as the target image signal processor based at least on all the second perception results comprises:
determining a performance evaluation result of each candidate image signal processor based on all the second perception results, the construction costs of each candidate image signal processor, and the image processing time of each candidate image signal processor; and
selecting the candidate image signal processor corresponding to the optimal performance evaluation result as the target image signal processor.

4. The method for constructing an image signal processor according to claim 2 or 3, wherein the processing all the first perception results to obtain a second perception result corresponding to each candidate image signal processor comprises:
calculating weighted average of all the first perception results corresponding to each candidate image signal processor, to obtain the second perception result corresponding to each candidate image signal processor.

5. The method for constructing an image signal processor according to claim 4, wherein before calculating weighted average of all the first perception results corresponding to each candidate image signal processor, to obtain the second perception result for each candidate image signal processor, the method further comprises:
setting, based on a priority of each perception task model, a weight of the first perception result corresponding to each perception task model.

6. The method for constructing an image signal processor according to any one of claims 1 to 5, wherein the constructing a plurality of candidate image signal processors based on at least some of the image signal processing modules from a collection comprises:
selecting a plurality of sets of different image signal processing modules from the collection and combining them to construct the plurality of candidate image signal processors.

7. The method for constructing an image signal processor according to any one of claims 1 to 6, wherein the constructing a plurality of candidate image signal processors based on at least some of the image signal processing modules from a collection comprises: selecting a plurality of sets of same image signal processing modules from the collection and arranging them to construct the plurality of candidate image signal processors.

8. The method for constructing an image signal processor according to any one of claims 1 to 7, further comprising:
determining a priority of each image signal processing module from the collection based on all the first perception results corresponding to each candidate image signal processor.

9. A device for constructing an image signal processor, comprising a processor and a storage apparatus configured to store a plurality of program codes, wherein the program codes are adapted to be loaded and executed by the processor to perform the method for constructing an image signal processor according to any one of claims 1 to 8.

10. An autonomous driving system, comprising a device for constructing an image signal processor according to claim 9.

11. A non-transitory computer-readable storage medium storing a plurality of program codes, wherein the program codes are adapted to be loaded and executed by the processor to perform the method for constructing an image signal processor according to any one of claims 1 to 8.
